# FASCICULE DE BREVET EUROPEEN

(11) **EP 3 114 598 B1**
(45) Date de publication et mention de la délivrance du brevet: **22.11.2017**
(21) Numéro de dépôt: 15709296.6
(22) Date de dépôt: 20.02.2015
(51) Int. Cl.: H04L 29/06, G06F 21/10

(54) **PROCÉDÉ DE FOURNITURE, À UN TERMINAL, DE CONTENUS MULTIMÉDIAS PROTÉGÉS**
VERFAHREN ZUR BEREITSTELLUNG VON GESCHÜTZTEM MULTIMEDIA-INHALT AN EIN ENDGERÄT
METHOD FOR PROVIDING PROTECTED MULTIMEDIA CONTENT TO A TERMINAL

(30) Priorité: 02.03.2014 FR 1451666
(43) Date de publication de la demande: 11.01.2017
(73) Titulaire: Viaccess, 92057 Paris La Défense Cedex (FR)
(72) Inventeur: PHIRMIS, Mathieu, F-92160 Antony (FR); BOIVIN, Mathieu, F-93600 Aulnay-sous-Bois (FR); CHIEZE, Quentin, F-75009 Paris (FR); POCHON, Nicolas, F-75014 Paris (FR)
(74) Mandataire: Colombo, Michel
(86) Numéro de dépôt international: PCT/FR2015/050424
(87) Numéro de publication internationale: WO 2015/132500

(56) Documents cités:
- EP-A2- 1 376 304
- EP-A2- 1 806 672
- US-A1- 2014 033 323

## Description

L'invention concerne un procédé de fourniture, à un terminal, de contenus multimédias protégés par un système de protection de contenus multimédias. L'invention concerne également un procédé d'obtention, par un terminal, de contenus multimédias protégés pour la mise en oeuvre de ce procédé de fourniture de contenus multimédias. L'invention concerne enfin un terminal et un support d'enregistrement d'informations pour la mise en oeuvre de ce procédé d'obtention de contenus multimédias.

Les procédés considérés, peuvent être mis en oeuvre au titre de tout service de fourniture de contenus multimédias protégés, dans tout système de fourniture en ligne de contenus multimédias protégés, dans lequel une tête de réseau assure la protection des contenus et leur transmission à une pluralité de terminaux.

Un terminal est utilisé par un client du service pour accéder à un contenu en vue de le jouer. Accéder à un contenu multimédia, signifie ici le charger en mémoire et en lever la protection, à la volée alors qu'on le reçoit, ou sur un support d'enregistrement sur lequel il a préalablement été enregistré, l'enregistrer, ou en faire toute autre utilisation offerte par le service de fourniture de contenus multimédias protégés.

Les contenus fournis sont :
- des contenus audiovisuels, par exemple des programmes de télévision,
- des contenus audio seulement, par exemple un programme radiophonique, ou
- plus généralement, tout contenu numérique contenant de la vidéo et/ou de l'audio tel qu'une application informatique, un jeu, un diaporama, une image ou tout ensemble de données.

Parmi ces contenus, on considérera plus particulièrement dans la suite des contenus dits temporels. Un contenu multimédia temporel est- un contenu multimédia dont le jeu est une succession dans le temps de sons, dans le cas d'un contenu temporel audio, ou d'images, dans le cas d'un contenu temporel vidéo, ou de sons et d'images temporellement synchronisés entre eux dans le cas d'un contenu multimédia temporel audiovisuel. Un contenu multimédia temporel peut également comporter des composantes temporelles interactives temporellement synchronisées avec les sons ou les images.

Pour être fourni, un tel contenu est d'abord codé, c'est-à-dire compressé, de façon à ce que sa transmission requière une moindre bande passante.

A cet effet, la composante vidéo du contenu est codée selon un format vidéo, tel par exemple que MPEG-2. Le lecteur intéressé pourra trouver une présentation complète de ce format dans le document publié par l'Organisation internationale de normalisation sous la référence ISO/IEC 13818-2:2013 et le titre « Technologies de l'information - Codage générique des images animées et du son associé - Partie 2: Donnée vidéo ». De nombreux autres formats, tels que MPEG-4 ASP, MPEG-4 Part 2, MPEG-4 AVC (ou Part 10), HEVC (High Efficiency Video Coding), ou WMV (Windows Media Video) peuvent alternativement être utilisés, et reposent sur les mêmes principes. Ainsi, tout ce qui suit s'applique également à ces autres formats vidéo qui reposent sur le même principe que le codage MPEG-2.

Le codage MPEG-2 fait appel à des procédés généraux de compression de données. Pour les images fixes, elle exploite notamment la redondance spatiale interne à une image, la corrélation entre les points voisins et la moindre sensibilité de l'oeil aux détails. Pour les images animées, elle exploite la forte redondance temporelle entre images successives. L'exploitation de cette dernière permet de coder certaines images du contenu, ici dites déduites, en référence à d'autres, ici dites sources, par exemple par prédiction ou interpolation, de sorte que leur décodage n'est possible qu'après celui desdites images sources. D'autres images, ici dites initiales, sont codées sans référence à de telles images sources, c'est-à-dire qu'elles contiennent chacune, lorsqu'elles sont codées, l'ensemble des informations nécessaires à leur décodage et donc qu'elles peuvent être complètement décodées indépendamment des autres images. Les images initiales sont ainsi le point d'entrée obligatoire lors de l'accès au contenu. Le contenu codé résultant ne comporte donc pas les données nécessaires au décodage de chacune des images indépendamment des autres, mais est constitué de « séquences » selon la terminologie MPEG-2. Une séquence réalise la compression d'au moins un « groupe d'images » (ou GOP, pour Group Of Pictures, dans MPEG-2). Un groupe d'images est une suite d'images consécutives dans laquelle chaque image est :
- soit initiale et source pour au moins une image déduite contenue dans la même suite d'images consécutives,
- soit déduite et telle que chacune des images sources nécessaires à son décodage appartient à la même suite d'images consécutives.
Un groupe d'images ne contient pas de suite d'images consécutives plus petite et possédant les mêmes propriétés que ci-dessus. Le groupe d'images est ainsi la plus petite partie de contenu à laquelle on peut accéder sans avoir à décoder au-préalable une autre partie de ce contenu.

Une séquence est délimitée par une « en-tête » et une « fin », chacune identifiée par un premier code spécifique. L'en-tête comporte des paramètres qui caractérisent des propriétés attendues des images décodées, telles que les tailles horizontales et verticales, ratio, fréquence. Le standard recommande de répéter l'en-tête entre les groupes d'images de la séquence, de façon à ce que ses occurrences successives soient espacées d'environ quelques secondes dans le contenu codé.

Par exemple, un groupe d'images comporte le plus couramment plus de 5 à 10 images et, généralement, moins de 12 ou 20 ou 50 images. Par exemple, dans un système à 25 images par seconde, un groupe d'images, représente typiquement une durée de jeu supérieure à 0,1 ou 0,4 seconde et, généralement, inférieure à 0,5 ou 1 ou 10 secondes.

Un contenu multimédia temporel peut comporter plusieurs composantes vidéo. Dans ce cas, chacune de ces composantes est codée comme ci-dessus décrit.

La composante audio du contenu est par ailleurs codée selon un format audio tel que MPEG-2 Audio. Le lecteur intéressé pourra trouver une présentation complète de ce format dans le document publié par l'Organisation internationale de normalisation sous la référence ISO/IEC 13818-3:1998 et le titre « Technologies de l'information - Codage générique des images animées et des informations sonores associées - Partie 3: Son ». De nombreux autres formats, tels que MPEG-1 Layer III, mieux connu sous l'appellation MP3, AAC (Advanced Audio Coding), Vorbis ou WMA (Windows Media Audio), peuvent alternativement être utilisés, et reposent sur les mêmes principes. Ainsi, tout ce qui suit s'applique également à ces autres formats audios qui reposent sur les mêmes principes que le codage MPEG-2 Audio.

Le codage MPEG-2 Audio obéit aux mêmes principes ci-dessus décrits pour celle d'un contenu temporel vidéo. Le contenu codé résultant est donc, de façon analogue, constitué de « trames ». Une trame est l'analogue, en audio, d'un groupe d'images en vidéo. La trame est donc notamment la plus petite partie de contenu audio à laquelle on peut accéder sans avoir à décoder une autre partie de ce contenu audio. La trame contient en outre l'ensemble des informations utiles à son décodage.

Une trame comporte typiquement plus de 100 ou 200 échantillons codant chacun un son et, généralement, moins de 2000 ou 5000 échantillons. Typiquement, lorsqu'elle est jouée par un appareil multimédia, une trame dure plus de 10 ms ou 20 ms et, généralement, moins de 80 ms ou 100 ms. Par exemple, une trame comporte 384 ou 1152 échantillons codant chacun un son. Selon la fréquence d'échantillonnage du signal, cette trame représente une durée de jeu de 8 à 12, ou 24 à 36 millisecondes.

Un contenu multimédia temporel peut comporter plusieurs composantes audio. Dans ce cas, chacune de ces composantes est codée comme ci-dessus décrit.

Les composantes codées du contenu, également qualifiées de trains élémentaires de données, sont ensuite multiplexées, c'est-à-dire, notamment, synchronisées temporellement, puis combinées en un seul train, ou flux, de données.

Un tel contenu, notamment lorsqu'il est l'objet de droits tels que des droits d'auteur ou des droits voisins, est fourni protégé par un système de protection de contenus multimédias. Ce système permet d'assurer le respect de conditions d'accès au contenu qui découlent de ces droits.

Il est alors typiquement fourni chiffré au titre de sa protection par un système de gestion de droits numériques, ou DRM, pour Digital Rights Management, en anglais. Ce chiffrement est généralement réalisé au moyen d'une clé de chiffrement, par un algorithme symétrique. Il s'applique au flux résultant du multiplexage ou, avant multiplexage, aux composantes du contenu codé.

Un système de DRM est en effet un système de protection de contenus multimédias. La terminologie du domaine des systèmes de gestion de droits numériques est ainsi utilisée dans la suite de ce document. Le lecteur intéressé pourra par exemple en trouver une présentation plus complète dans les documents suivants :
- Concernant l'architecture générale d'un système de DRM : DRM Architecture, Draft version 2.0, OMA-DRM-ARCH-V2_0-20040518-D, Open Mobile Alliance, 18 mai 2004,
- Concernant plus particulièrement les licences : DRM Specification, Draft version 2.1, OMA-TS-DRM-DRM-V2_1-20060523-D, Open Mobile Alliance, 23 mai 2006.

Dans un tel système de gestion de droits numériques, l'obtention d'une licence permet à un terminal d'accéder au contenu multimédia protégé.

De structure bien connue une telle licence comporte au moins un droit d'accès nécessaire à ce terminal pour accéder au contenu, et typiquement un critère temporel de validité. Le droit d'accès comporte typiquement une clé, dite de contenu, nécessaire au déchiffrement du contenu multimédia protégé par un algorithme de déchiffrement symétrique. Le critère temporel de validité caractérise la période de temps sur laquelle la licence peut être exploitée. Il consiste typiquement en un ou plusieurs intervalles de temps. En dehors de ces intervalles de temps, la licence ne permet pas l'accès au contenu.

La clé de contenu est généralement insérée dans la licence sous forme d'un cryptogramme obtenu par chiffrement de la clé de contenu avec une clé de chiffrement, dite « de terminal », propre au terminal.

Pour accéder au contenu, le terminal extrait de la licence la clé de contenu, en déchiffrant son cryptogramme au moyen de sa clé de terminal.

Le terminal désembrouille ensuite le contenu au moyen de la clé de contenu ainsi extraite de la licence, en levant ainsi la protection. Puis, le terminal décode le contenu désembrouillé.

Le terminal génère ainsi un flux multimédia en clair comportant au moins une suite temporelle de séquences vidéo ou de groupes d'images, ou de trames audio. Ce flux multimédia est apte à être joué par un appareil multimédia raccordé à ce terminal. Ici, par « en clair », on désigne le fait que le flux multimédia n'a plus besoin d'être désembrouillé pour être joué, par un appareil multimédia, de façon directement perceptible et intelligible par un être humain. Par « appareil multimédia », on désigne en outre tout dispositif apte à jouer le flux multimédia en clair, tel par exemple qu'un téléviseur ou un lecteur multimédia.

De façon à en améliorer la protection, le contenu est fourni, par le système de fourniture de contenus multimédias protégés, scindé en plusieurs segments successifs de contenu individuellement protégés par le système de gestion de droits numériques.Ces segments sont donc ordonnés temporellement les uns par rapport aux autres.

Plus précisément, un segment est une partie restreinte du flux multimédia en clair dont le jeu a une durée inférieure à celle du jeu du flux multimédia en entier. Un segment comporte donc une partie restreinte de chaque composante vidéo et audio du flux multimédia en clair, dont le jeu a une même durée inférieure à celle du jeu du flux multimédia en entier. Ces parties restreintes de composantes sont synchronisées dans le flux pour être jouées simultanément. Un segment comporte donc la partie restreinte de la la suite temporelle de séquences vidéo ou de groupes d'images, ou de trames audio réalisant le codage de cette partie restreinte de composante du flux multimédia en clair. Cette partie restreinte est constituée d'une pluralité de séquences vidéos ou de groupes d'images, ou de trames audio successives. Successives s'entend ici comme se suivant immédiatement, c'est-à-dire sans être séparées, dans le déroulement temporel du contenu, par d'autres séquences vidéo ou de groupes d'images, ou trames audio appartenant à un autre segment. Typiquement, un segment comporte plus de dix, cent, mille ou dix mille, groupes d'images vidéo successifs d'une même composante vidéo codée du flux, ou plus de dix à cent fois plus de trames audio successives d'une même composante audio codée du flux.

Chaque segment est chiffré par l'algorithme symétrique, au titre de sa protection par le système de gestion de droits numériques, au moyen d'une clé de contenu spécifique. Cette clé de contenu est dite « spécifique » car elle est uniquement utilisée pour chiffrer ce segment parmi l'ensemble des segments du contenu multimédia. L'obtention d'une licence spécifique, comportant la clé de contenu spécifique nécessaire au déchiffrement du segment protégé, permet à un terminal d'accéder à ce segment.

Un segment n'est donc pas caractérisé par sa structure, mais par la clé de contenu spécifique utilisée pour le chiffrer. Un segment est la pluralité de séquences vidéos et de trames audios immédiatement successives chiffrées avec une même clé de contenu spécifique.

Pour améliorer encore la protection du contenu, un niveau intermédiaire de chiffrement des clés de contenu est introduit. Il permet de changer, au cours du déroulement temporel du contenu, les clés de chiffrement utilisées pour calculer les cryptogrammes des clés de contenu spécifiques transportés dans les licences spécifiques.

On regroupe à cet effet les segments en blocs de segments. Chaque bloc ne contient qu'une partie restreinte des segments du contenu. Typiquement, chaque bloc contient au minimum un segment et, généralement, plusieurs segments successifs. Successifs s'entend ici comme se suivant immédiatement, c'est-à-dire sans être séparés, dans le déroulement temporel du contenu, par des segments n'appartenant pas au bloc considéré. On associe à chacun de ces blocs une clé de chiffrement de clés de contenu, dite clé intermédiaire. La clé de contenu nécessaire au déchiffrement d'un segment, est chiffrée avec la clé intermédiaire associée au bloc auquel appartient ce segment. Le cryptogramme résultant est ensuite inséré dans une licence, dite licence intermédiaire, transmise conjointement au segment. La licence intermédiaire comporte également un identifiant d'une licence, dite « de terminal ». La licence de terminal comporte un cryptogramme de la clé intermédiaire obtenu par chiffrement de cette clé intermédiaire avec la clé de terminal.

Un bloc de segments n'est donc pas caractérisé par sa structure, mais par la clé intermédiaire utilisée pour chiffrer la clé de contenu spécifique de tout segment lui appartenant. Un bloc de segments correspond donc aux segments associés chacun à une licence intermédiaire dans laquelle la clé de contenu spécifique est chiffrée avec une même clé intermédiaire.

Dans un tel système, un terminal reçoit donc, conjointement à un segment chiffré, une licence intermédiaire comportant le cryptogramme de la clé de contenu spécifique nécessaire au déchiffrement du segment. Ce cryptogramme a été obtenu en chiffrant cette clé de contenu spécifique avec une clé intermédiaire. Afin d'accéder au segment, le terminal doit d'abord obtenir la licence de terminal qui comporte le cryptogramme de cette clé intermédiaire obtenu en chiffrant cette clé avec sa clé de terminal. Le terminal obtient cette licence de terminal au moyen de l'identifiant contenu dans la licence intermédiaire.

Pour exploiter cette licence de terminal, le terminal doit ensuite d'abord évaluer son critère temporel en regard d'une date de service, contrôlée par l'opérateur du service en tant que référence temporelle du service. Cette évaluation consiste à déterminer si la date de service, typiquement exprimée en secondes, est ou non comprise dans la période de validité de la licence de terminal. Le terminal doit donc connaître ou acquérir la date de service.

Si le résultat de l'évaluation du critère temporel de la licence de terminal est positif, le terminal poursuit l'exploitation de la licence de terminal, notamment en déchiffrant le cryptogramme de la clé intermédiaire qu'elle comporte, au moyen de sa clé de terminal. Si le résultat de cette évaluation est négatif, le terminal inhibe l'exploitation de la licence de terminal, et ne déchiffre notamment pas le cryptogramme de la clé intermédiaire qu'elle comporte. Cela interdit ainsi l'exploitation de la licence intermédiaire, et l'accès au segment protégé grâce à la clé de contenu dont elle comporte le cryptogramme.

La date de service acquise par le terminal, conditionne ainsi son accès au bloc de segments auquel appartient le segment reçu, et donc le respect des droits dont ce bloc est l'objet. On comprend qu'il est important que la date de service ne puisse pas être modifiée facilement par un utilisateur du terminal. En effet, il pourrait alors la régler à une date comprise dans la période de validité de la licence de terminal, s'affranchissant ainsi de la date de service contrôlée par l'opérateur, ainsi que du respect des droits dont le segment correspondant est l'objet.

Pour remédier à cet inconvénient, il a déjà été proposé d'équiper les terminaux avec des horloges locales sécurisées, c'est-à-dire des horloges qui ne peuvent pas être réglées par l'utilisateur du terminal. De telles solutions sont par exemple divulguées dans les demandes US20090006854, US20060248596 et US2010024000A1. La demande US2014/0033323 A1 divulgue un procédé de mise à jour dans un dispositif mobile d'un dernier bon temps connu, dans lequel un dernier bon temps connu est avancé et stocké chaque fois qu'un événement de déclenchement se produit.

De nombreux terminaux ne possèdent pourtant pas d'horloge sécurisée, c'est-à-dire de mécanisme interne apte à fournir localement une date avec une garantie jugée suffisante qu'elle soit suffisamment proche de la date de service. La plupart ne possèdent en effet pas d'horloge locale, et les autres en possèdent une non sécurisée, c'est-à-dire non protégée et restant donc modifiable par l'utilisateur.

Pour remédier à cette dernière difficulté, il a été proposé d'intégrer un serveur de dates au système de DRM. Une horloge locale, interne au terminal mais non protégée, est alors synchronisée régulièrement avec ce serveur de dates, par exemple selon le protocole d'heure réseau, dit NTP, pour « Network Time Protocol », en anglais. Si le terminal ne comporte pas d'horloge locale ou si l'on ne souhaite pas utiliser cette horloge locale, alors la date de service est acquise auprès du serveur de dates, systématiquement à chaque fois que le critère temporel de validité d'une licence doit être évalué.

Ce dernier mode de réalisation est avantageux car, le recours au serveur de dates y étant systématique, il dispense d'utiliser une horloge locale, et impose l'utilisation d'une date de service contrôlée par l'opérateur. Toutefois, il en résulte en général une sollicitation, et donc une charge de calcul, importantes du serveur de dates, ce qui nécessite beaucoup de serveurs pour tenir la charge. En effet, lorsque de nombreux terminaux requièrent, dans un court intervalle de temps, l'accès à des contenus offerts par le service de fourniture de contenus multimédias protégés, il faut donc évaluer le critère temporel de validité des licences correspondantes pour chacun des terminaux utilisés. Il en résulte une charge de calcul importante pour le serveur de dates. Il en résulte également un trafic réseau important vers les serveurs de date. Or, ces charges de calcul et trafic réseau importants sont susceptibles de nuire à la qualité du service rendu.

Il est donc particulièrement intéressant de réduire cette charge et ce trafic réseau, tout en garantissant un niveau de sécurité élevé du système vis-à-vis des tentatives de manipulation de la date de service et sans qu'il soit nécessaire d'utiliser une horloge locale dans le terminal.

L'invention vise à atteindre cet objectif.

L'invention a ainsi pour objet un procédé de fourniture, à un terminal, de contenus multimédias protégés conforme à la revendication 1.

Dans un tel procédé, l'association, à l'étape a), à chacun des segments, de sa date de transmission, et la transmission dans le flux, à l'étape b), de cette date conjointement au segment, permettent au terminal de recevoir, à l'étape c), cette date conjointement au segment, et donc d'en disposer, lors de la phase de jeu. Le terminal est ainsi doté d'une nouvelle source de dates, alternative au serveur de dates et différente d'une horloge locale, mais contrôlée par l'opérateur du service de fourniture de contenus multimédias protégés. Elle fournit donc des dates probablement plus proches de la date de service, et plus difficiles à modifier que celle d'une horloge locale. Ces dates sont donc ainsi plus sûres.

Dans un tel procédé, l'extraction du flux, à l'étape g), conjointement à un segment, de la date de transmission du segment, permet au terminal d'utiliser comme date de service cette date contrôlée par l'opérateur du service, lors d'une exécution de l'étape f), donc sans recourir au serveur de dates. La charge du serveur de dates, ainsi que le trafic réseau associé, sont ainsi réduits sans compromettre le niveau de sécurité du système.

La comparaison, à l'étape g), de la date de transmission extraite à la dernière date de service acquise, permet de contraindre cette date de service à augmenter et donc de restreindre autant que possible la plage des dates de service possibles entre deux requêtes au serveur de dates.

Enfin, la transmission, dans le flux, de la date de transmission génère moins de trafic réseau que la connexion à un serveur de dates. En effet, pour chaque date transmise dans le flux il n'est pas nécessaire d'établir puis de terminer une connexion avec un serveur. On utilise ici une connexion déjà établie entre le terminal et une tête de réseau.

L'invention a également pour objet un procédé d'obtention, par un terminal, pour la mise en oeuvre du procédé ci-dessus, de contenus multimédias protégés, conforme à la revendication 2.

Les modes de réalisation de ce procédé d'obtention de contenus multimédias protégés peuvent comporter une ou plusieurs des caractéristiques des revendications dépendantes.

Ces modes de réalisation de ce procédé d'obtention de contenus multimédias protégés présentent en outre les avantages suivants :
- le maintien inchangée, à l'étape g), de la dernière date de service acquise si la date de transmission extraite est antérieure à cette date de service d'au plus une première durée prédéterminée, permet d'autoriser un jeu différé d'un contenu en cours de réception ;
- la comparaison, à l'étape g), de la date de transmission extraite à la date de service acquise lors de la dernière exécution de l'étape e), permet de contraindre le terminal à acquérir la date de service auprès du serveur de dates, lorsqu'il ne l'a pas fait depuis au moins la deuxième durée prédéterminée ;
- l'inhibition, à l'étape e), si la connexion au serveur de dates ne peut pas être établie, permet de renforcer la contrainte d'acquérir la date de service auprès du serveur de dates ;
- le comptage du nombre de fois consécutives où la connexion au serveur de dates ne peut être établie, permet de protéger la qualité du service rendu de l'influence de difficultés momentanées de connexion au serveur de dates, en autorisant la poursuite du traitement du contenu multimédia même en absence de connexion au serveur de dates ;
- l'acquisition comme date de service, de toute date de transmission extraite postérieure à la dernière date de service acquise, permet de contraindre la dernière date de service acquise à augmenter au rythme de celles des segments reçus.

L'invention a également pour objet un support d'enregistrement d'informations comportant des instructions pour la mise en oeuvre du procédé ci-dessus d'obtention de contenus multimédias, lorsque ces instructions sont exécutées par un calculateur électronique.

L'invention a enfin pour objet un terminal pour la mise en oeuvre du procédé ci-dessus , ce terminal étant conforme à la revendication 10.

L'invention sera mieux comprise à la lecture de la description qui va suivre, donnée uniquement à titre d'exemple non limitatif, et faite en référence aux dessins sur lesquels :
- la figure 1 est une représentation schématique de l'architecture d'un système de fourniture de contenus multimédias protégés,
- la figure 2 est une représentation schématique d'une licence intermédiaire,
- la figure 3 est une représentation schématique d'une licence de terminal,
- la figure 4 est une représentation schématique d'un flux transmis par une tête de réseau à un terminal dans le système de la figure 1,
- la figure 5 est une représentation schématique d'un procédé de fourniture de contenus multimédias protégés à l'aide du système de la figure 1.

Dans ces figures, les mêmes références sont données pour désigner les mêmes éléments.

Dans la suite de cette description, les caractéristiques bien connues de l'homme du métier ne sont pas décrites en détail.

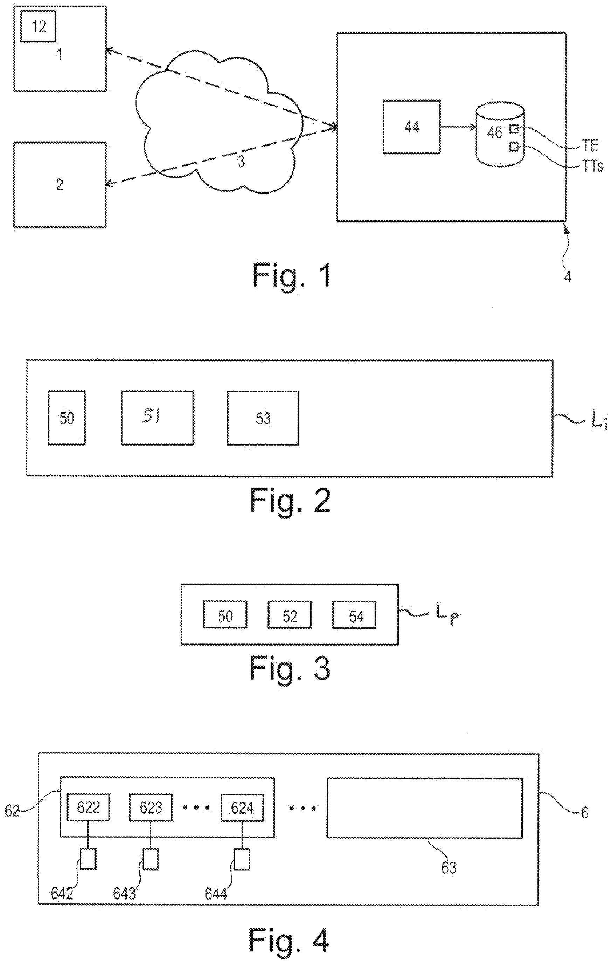

La figure 1 représente un système de fourniture de contenus multimédias protégés. Ce système comprend une pluralité, typiquement des milliers, de terminaux reliés, par l'intermédiaire d'un réseau 3, d'une part à une tête 1 de réseau, et d'autre part à un serveur 2 de dates. Ici, on suppose que tous ces terminaux sont identiques. Ainsi, pour simplifier l'illustration, seul un terminal 4 est représenté sur la figure 1.

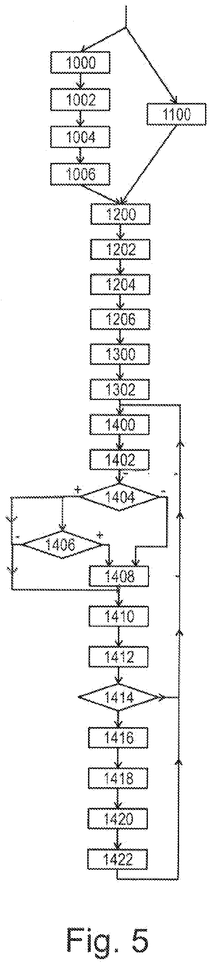

Le terminal 4 est apte à accéder à un contenu en vue de le jouer. A cet effet, le terminal 4 comporte un calculateur électronique 44 programmable et une mémoire 46. Le calculateur 44 est apte à exécuter des instructions enregistrées dans la mémoire 46. La mémoire 46 comporte les instructions nécessaires à l'exécution du procédé de la figure 5. La mémoire 46 comporte également une dernière date de service acquise TE et une date TTₛ de service acquise lors de la dernière connexion au serveur 2.

Le réseau 3 est un réseau grande distance de distribution d'informations permettant d'établir une communication bidirectionnelle entre le terminal 4 et la tête 1 de réseau et le serveur 2. Par exemple, le réseau 3 est la toile d'araignée mondiale, plus connue sous le terme de « réseau Internet ».

La tête 1 de réseau est apte à protéger un contenu, et à le transmettre au terminal 4. A cet effet, la tête 1 comporte une horloge 12. Cette horloge 12 fournit à la tête 1 la date de transmission d'un segment de contenu. Cette horloge 12 est ici synchronisée, selon le protocole d'heure réseau NTP (Network Time Protocol), avec une première horloge de référence externe à la tête 1.

Le serveur 2 de dates est apte à fournir au terminal 4 une date de service en réponse à une requête. Le serveur 2 est ici synchronisé, selon le protocole NTP, avec une seconde horloge de référence externe au système.

Les première et seconde horloges de référence sont, ou non, la même horloge. En vertu de l'architecture hiérarchique, en niveaux appelés strates, associée au protocole NTP, les première et seconde horloges de référence sont elles-mêmes de la même façon, chacune synchronisée avec une horloge de référence de la strate immédiatement supérieure, et ainsi de suite, de proche en proche et en dernière instance, chacune synchronisée avec une horloge de référence de la strate 1. A chaque strate, ces horloges de référence sont, ou non, la même horloge.

Ici, pour la tête 1 et le serveur 2, seules les différences par rapport à une tête de réseau conventionnelle et à un serveur de dates conventionnel sont décrites en détails. Pour les informations concernant une tête de réseau conventionnelle et un serveur de dates conventionnel, le lecteur peut se référer à l'état de l'art cité dans l'introduction de cette demande de brevet.

La figure 2 représente une licence intermédiaire Lᵢ. Cette licence Lᵢ comporte notamment un cryptogramme (Kₛᵢ)*K_{Gp} 51 obtenu en chiffrant une clé Kₛᵢ avec une clé intermédiaire K_{Gp}. La clé Kₛᵢ est la clé utilisée pour chiffrer le segment Sᵢ du contenu multimédia. La clé intermédiaire K_{Gp} est la clé utilisée pour chiffrer les clés Kₛᵢ de tous les segments du bloc Gₚ. La licence intermédiaire Lᵢ comporte également :
- un identifiant Id(K_{Gp}) 50 de cette clé intermédiaire K_{Gp}, et
- une date TSᵢ 53 de transmission du segment Sᵢ.

Les notations utilisées dans cette figure et la figure 3 sont décrites plus en détail en référence à la figure 5.

La figure 3 représente une licence Lₚ, ou licence de terminal, d'un système de gestion de droits numériques. Cette licence comporte un droit 52 d'accès, et un critère temporel 54 de validité tels que définis dans la partie introductive de cette demande de brevet. Le droit 52 d'accès comporte ici un cryptogramme de cette clé intermédiaire K_{Gp}. La licence Lₚ comporte aussi l'identifiant Id(K_{Gp}) 50 de clé intermédiaire.

La figure 4 représente un flux 6 transmis par la tête 1 de réseau au terminal 4 lors de la mise en oeuvre du procédé de la figure 5. Le flux 6 comporte plusieurs blocs de segments de contenu multimédia. Par exemple, le flux 6 comporte plus de deux, dix ou cent blocs de segments. Pour simplifier la figure 3, seuls deux blocs 62, 63 ont été représentés. Sur cette figure, le symbole « ... » entre les blocs 62, 63 indique que des blocs n'ont pas été représentés. Ici, on suppose que tous ces blocs sont structurellement identiques et diffèrent les uns des autres uniquement par le contenu encodé dans chacun des segments. En particulier, tous les blocs comportent le même nombre de segments. Ainsi, seul la structure du bloc 62 va maintenant être décrite plus en détail.

Le bloc 62 comporte une pluralité de segments. Typiquement, le bloc 62 comporte plus de dix ou cent segments successifs. Le bloc 62 comporte seulement une partie restreinte de l'ensemble des segments dont la concaténation forme la totalité du contenu. Ici seuls trois segments 622, 623 et 624 ont été représentés sur la figure 4. Le symbole « ... » entre les segments 623 et 624 indique que d'autres segments n'ont pas été représentés. Ici, tous ces segments sont structurellement identiques et diffèrent les uns des autres uniquement par les informations encodées dans chacun d'eux. Ainsi, seul le segment 622 est maintenant décrit plus en détail.

Le segment 622 est conforme à la définition du terme « segment » donnée dans l'introduction de ce texte. Au segment 622 est associée une licence intermédiaire 642, transmise conjointement à ce segment dans le flux 6. Ici, cette association est réalisée par synchronisation du segment 622 et de la licence intermédiaire 642 dans le flux. Typiquement, cette synchronisation est réalisée par l'adjacence du segment 622 et de la licence intermédiaire 642 dans le flux, et, le moment venu, par leur transmission conjointe.

Le fonctionnement du système de la figure 1 va maintenant être décrit en référence au procédé de la figure 5.

Initialement, lors d'une étape 1000, de façon connue de l'homme du métier, la tête 1 de réseau obtient un contenu multimédia temporel en clair. Elle encode ensuite ce contenu.

Puis, lors d'une étape 1002, la tête 1 scinde le contenu multimédia encodé en plusieurs segments Sᵢ successifs de contenu. Ces segments Sᵢ sont ordonnés temporellement les uns par rapport aux autres, et leur séquence complète constitue le contenu. Dans la suite de cette description, l'indice « i » est le numéro d'ordre du segment Sᵢ dans cette suite temporelle de segments.

La tête 1 de réseau assure ensuite la protection individuelle, par un système de gestion de droits numériques, de chacun des segments Sᵢ. A ce titre, lors d'une étape 1004, elle chiffre chaque segment Sᵢ avec une clé Kₛᵢ de contenu spécifique, qui n'est pas utilisée pour chiffrer un autre segment de la même séquence de segments.

Ensuite, lors d'une étape 1006, la tête 1 de réseau constitue des blocs Gₚ de segments successifs. L'indice « p » est le numéro d'ordre du bloc dans la suite de blocs successifs ainsi constituée. Ici, la tête 1 de réseau fixe à cet effet le nombre de segments contenus dans chaque bloc. Pour chaque bloc comportant ce nombre de segments successifs, elle génère ensuite une clé intermédiaire K_{Gp}. La clé intermédiaire K_{Gp} est différente pour chaque bloc du contenu multimédia protégé. Puis elle chiffre la clé Kₛᵢ de chiffrement de chacun des segments Sᵢ du bloc Gₚ avec la clé intermédiaire K_{Gp}. Elle obtient donc pour chaque segment Sᵢ du bloc Gₚ le cryptogramme (Kₛᵢ)*K_{gp} 51. La tête 1 de réseau insère ensuite l'identifiant Id(K_{Gp}) 50 de la clé intermédiaire K_{Gp} et le cryptogramme (Kₛᵢ)*K_{Gp} 51 dans la licence intermédiaire Lᵢ qu'elle associe à ce segment Sᵢ comme décrit en référence à la figure 3.

En parallèle, par exemple de l'une des étapes 1000, 1002, 1004 et 1006, lors d'une étape 1100, la tête 1 de réseau reçoit du terminal 4 une requête visant à obtenir le contenu. Cette requête contient notamment un identifiant d'une clé K_{T} de terminal. La clé K_{T} est ici unique pour chaque terminal. De façon connue de l'homme du métier, la clé K_{T} a été obtenue par le terminal lors de sa phase de fabrication ou de personnalisation. La clé K_{T} a ensuite été obtenue par la tête 1 de réseau lors d'une phase d'enregistrement du terminal 4 avant la mise en oeuvre du procédé de la figure 5.

En réponse à la requête reçue à l'étape 1100, la tête 1 de réseau met en oeuvre les étapes 1200, 1202, 1204 et 1206.

Lors de l'étape 1200, la tête 1 de réseau chiffre chaque clé K_{Gp} intermédiaire utilisée avec la clé K_{T} du terminal 4 pour obtenir le cryptogramme (K_{Gp})*K_{T}. Puis pour chaque bloc Gₚ, elle insère, en tant que droit 52 d'accès à ce bloc, le cryptogramme (K_{Gp})*K_{T} dans la licence Lₚ de terminal destinée au terminal 4. L'identifiant Id(K_{Gp}) 50 de la clé K_{Gp} intermédiaire est aussi inséré dans la licence Lₚ et dans chaque licence Lᵢ intermédiaire associée à tout segment Sᵢ du bloc Gₚ. La licence Lₚ est ainsi associée à chacun des segments Sᵢ, et donc au bloc Gₚ, par cette identifiant Id(K_{Gp}). Enfin, la tête 1 de réseau insère, dans la licence Lₚ, le critère temporel 54 de validité de cette licence. Par exemple, ce critère 54 spécifie que la licence Lₚ ne peut être utilisée qu'entre le 1^{er} janvier 2014 et le 1^{er} mars 2014.

Ensuite, lors d'une étape 1202, la tête 1 de réseau associe à chacun des segments Sᵢ sa date TSᵢ de transmission. Ici, elle obtient la date de transmission du segment Sᵢ auprès de l'horloge 12. Puis, elle insère cette date TSᵢ de transmission dans la licence Lᵢ intermédiaire associée au segment Sᵢ. Typiquement, cette date de transmission est celle de la fin du calcul de la licence Lᵢ intermédiaire associée au segment Sᵢ. Elle précède donc de peu, typiquement d'une fraction de seconde, le début de la transmission sur le réseau 3 de ce segment Sᵢ. Elle est de préférence insérée, protégée en intégrité, dans la licence Lᵢ.

La tête 1 de réseau génère ainsi de proche en proche le flux 6 comportant chacun des segments Sᵢ du bloc Gₚ considéré et sa licence Lᵢ intermédiaire associée qui comporte elle-même sa date TSᵢ de transmission.

La tête 1 de réseau transmet enfin, au terminal 4, lors de l'étape 1204 la licence Lₚ, et lors de l'étape 1206 le flux 6.

De façon connue de l'homme du métier, selon notamment la nature du service de fourniture de contenus considéré et la requête du terminal, les étapes 1204 et 1206 peuvent être synchronisées, ou indépendantes dans le temps. Par exemple, ici, le service de fourniture de contenus considéré est un service de diffusion de contenus, et la requête reçue à l'étape 1100, vise à obtenir le contenu pour le jouer à la volée au fur et à mesure de sa réception. L'étape 1204 précède alors l'étape 1206 de diffusion du contenu, de façon que la licence Lₚ soit reçue et traitée par le terminal avant que le bloc Gₚ ne soit joué. Il en est de même si la requête reçue à l'étape 1100 vise à obtenir le contenu pour en faire, à la volée au fur et à mesure de sa réception, toute autre utilisation contrôlée par le système de protection de contenus, telle que son enregistrement.

Le terminal reçoit ainsi, lors d'une étape 1300 la licence Lₚ, et lors d'une étape 1302 le flux 6.

De façon correspondante à ce qu'il en est pour les étapes 1204 et 1206, les étapes 1300 et 1302 peuvent être synchronisées, ou indépendantes dans le temps. Par exemple, ici, l'étape 1300 précède l'étape 1302, de façon que la licence Lₚ soit traitée par le terminal avant que le bloc Gₚ ne soit joué.

Ensuite, le terminal engage une phase de jeu du contenu. Lors de cette phase, il procède, successivement pour chacun des segments Si du flux 6 reçu, à des étapes 1400 à 1422.

Lors de l'étape 1400, le terminal extrait le segment Si et sa licence Lᵢ intermédiaire associée, du flux 6.

Ensuite, lors de l'étape 1402, le terminal extrait de la licence Lᵢ la date TSᵢ de transmission du segment Sᵢ.

Puis, lors de l'étape 1404, le terminal compare la date de transmission TSᵢ à la dernière date de service acquise, ici notée TE.

Si TSᵢ est postérieure à TE alors, lors de l'étape 1406, le terminal 4 remplace la valeur de la date TE par la valeur de la date TSᵢ extraite à l'étape 1402. Puis, toujours lors de l'étape 1406, le terminal 4 compare cette nouvelle date TE à la dernière date de service acquise auprès du serveur 2 de dates, ici notée TTₛ.

Si TE est postérieure à TTₛ d'au moins une durée prédéterminée, ici notée ETTD, alors le terminal procède à l'étape 1408 d'acquisition de la date de service auprès du serveur 2 de dates. Dans le cas contraire, le terminal procède directement à l'étape 1410. On force ainsi le terminal 4 à se connecter régulièrement au serveur 2.

La durée prédéterminée ETTD a pu être initialisée dans le terminal 4 lors de la production du système, ou par l'opérateur du service. Sa valeur est typiquement supérieure à dix ou vingt minutes. La valeur de la durée ETTD est également généralement inférieure à dix, cinquante ou cent heures.

Les valeurs des dates TE et TTₛ ont initialement pu être acquises par le terminal 4, lors d'une phase par exemple dite d'installation, d'activation ou de personnalisation, auprès du serveur 2 de dates, ou initialisées par exemple à zéro.

Lors de l'étape 1404, si TSᵢ est antérieure à TE de plus d'une durée prédéterminée, ici notée TSW, alors le terminal procède directement à l'étape 1408 d'acquisition de la date de service auprès du serveur 2 de dates. Ainsi, quand on ne peut pas se fier à la date de transmission, c'est essentiellement la date de service communiquée par le serveur 2 de dates qui est utilisée.

Enfin, lors de l'étape 1404, si TSᵢ est compris entre TE et TE-TSW, alors le procédé se poursuit directement par l'étape 1410. Dans ce cas, la date TE n'est pas mise à jour en fonction de la date TSᵢ extraite lors de l'étape 1402. Cette situation se produit lorsqu'un segment est joué par le terminal avec un léger différé par rapport à l'instant de réception de ce segment par ce terminal. La valeur du léger différé admissible est ici égale à TSW.

La durée prédéterminée TSW a pu être initialisée dans le terminal 4 lors de la production du système, ou par l'opérateur du service. Sa valeur est typiquement supérieure à dix ou vingt minutes. Généralement, sa valeur est également inférieure à une heure ou dix heures.

Lors de l'étape 1408, le terminal 4 authentifie le serveur 2, par exemple à l'aide d'un certificat électronique. Le terminal 4 transmet aussi, au serveur 2 de dates, une requête de date, et obtient en retour une date. Uniquement si le serveur 2 est authentifié avec succès, alors le terminal 4 acquiert cette date et remplace la valeur de la date TTₛ et de la date TE par la valeur de cette date obtenue auprès du serveur 2.

Ici, lors de l'étape 1408, si la connexion au serveur 2 de dates ne peut pas être établie ou si l'authentification échoue, le terminal 4 incrémente un compteur d'échecs de connexions. Si la valeur de ce compteur ne franchit pas un seuil prédéterminé, ici noté Max_tts_bypass, le terminal 4 procède à l'étape 1410 sans modifier les valeurs des dates TTₛ et TE. Si la valeur de ce compteur franchit le seuil Max_tts_bypass le terminal 4 inhibe les étapes 1410 et suivantes du procédé, notamment l'extraction du droit d'accès de la licence Lₚ de terminal, interdisant ainsi l'accès au segment Sᵢ. Ensuite, le compteur d'échec peut être réinitialisé à sa valeur initiale par l'opérateur du service. Il peut aussi être réinitialisé automatiquement après une durée prédéterminée, par exemple supérieure à 30 min ou 1 h ou 10 h.

Le seuil Max_tts_bypass a pû être initialisé dans le terminal 4 lors de la production du système, ou par l'opérateur du service. Sa valeur est typiquement supérieure à deux, trois ou cinq et, par exemple, inférieure à dix, vingt ou cinquante.

Lors de l'étape 1410, le terminal 4 extrait de la licence intermédiaire Lᵢ l'identifiant Id(K_{Gp}) 50 de la clé K_{Gp} intermédiaire.

Puis, lors de l'étape 1412, le terminal 4 recherche, parmi les licences de terminal reçues, la licence Lₚ qui comporte l'identifiant Id(K_{Gp}) 50.

Lors de l'étape 1414, le terminal 4 extrait le critère temporel 54 de la licence Lₚ trouvée à l'étape 1412. Puis il évalue ce critère en regard de la dernière date TE de service acquise. Si cette date de service satisfait le critère temporel 54, alors le terminal 4 met en oeuvre les étapes 1416 et suivantes du procédé. Sinon, il inhibe les étapes 1416 et suivantes du procédé, notamment l'extraction du droit d'accès de la licence Lₚ, interdisant ainsi l'accès aux segments et retourne à l'étape 1400 pour traiter le segment suivant Sᵢ₊₁.

Lors de l'étape 1416, si la clé K_{Gp} intermédiaire contenue dans le droit 52 d'accès n'en a pas déjà été extraite depuis le début de la phase de jeu, alors le terminal 4 extrait de la licence Lₚ trouvée à l'étape 1412 le cryptogramme (K_{gp})*K_{T}.

Ensuite, lors de l'étape 1418, le terminal 4 déchiffre le cryptogramme (K_{Gp})*K_{T} avec sa clé K_{T} de terminal, obtenant ainsi la clé K_{Gp} intermédiaire.

Puis, lors de l'étape 1420, le terminal 4 déchiffre le cryptogramme (Kₛᵢ)*K_{Gp} avec la clé K_{Gp} intermédiaire déchiffrée lors de l'étape 1418, obtenant ainsi la clé Kₛᵢ spécifique.

Enfin, lors de l'étape 1422, le terminal 4 déchiffre le cryptogramme du segment Sᵢ avec la clé spécifique Kₛᵢ obtenue lors de l'étape 1420, de façon à obtenir le segment Si en clair. Le segment Sᵢ en clair peut alors être transmis par le terminal 4 à tout appareil multimédia pour être joué. Le procédé retourne alors à l'étape 1400 pour recevoir et jouer le segment suivant Sᵢ₊₁.

De nombreux autres modes de réalisation de l'invention sont possibles. Par exemple, le contenu est fourni, par le système de fourniture de contenus multimédias protégés, chiffré avec plusieurs clés au titre de sa protection par le système de gestion de droits numériques. Plusieurs licences, contenant chacune au moins l'une de ces clés de contenu, sont alors nécessaires au terminal pour accéder au contenu. Le procédé revendiqué s'applique alors à l'une, au moins, de ces licences.

Dans un autre mode de réalisation, le droit 52 d'accès de la licence Lₚ comporte la clé intermédiaire K_{Gp} et non pas le cryptogramme (K_{Gp})*K_{T}. Dans ce mode de réalisation, la licence de terminal n'est pas nécessaire.

Dans le mode de réalisation précédent, le droit d'accès est un cryptogramme de la clé K_{Gp} obtenu en la chiffrant avec la clé cryptographique K_{T}. Un cryptogramme est une information insuffisante à elle seule pour retrouver la clé de contenu Kₛᵢ. Ainsi, si la transmission de la licence est interceptée, la seule connaissance du cryptogramme ne permet pas de retrouver la clé de contenu permettant de désembrouiller un segment du contenu multimédia. Pour retrouver la clé de contenu en clair, c'est-à-dire la clé de contenu permettant de désembrouiller directement le segment du contenu multimédia, le cryptogramme doit être combiné avec une information secrète. Dans l'exemple précédent, l'information secrète est la clé cryptographique K_{T} permettant de déchiffrer le cryptogramme(K_{Gp})*K_{T}. D'autres façons pour obtenir le cryptogramme contenu dans le droit d'accès sont possibles. Par exemple, le cryptogramme peut être un pointeur vers une clé cryptographique stockée en clair dans une table contenant une multitude de clés intermédiaires possibles. Dans ce cas, l'information secrète est la table associant à chaque pointeur une clé cryptographique en clair. Le cryptogramme peut aussi être :
- un identifiant de cette clé cryptographique, à fournir à la tête de réseau, via une voie de retour, permettant ainsi de requérir la clé auprès de la tête de réseau, puis de recevoir, en réponse et typiquement uniquement après une authentification réussie du terminal, la clé cryptographique ou une valeur d'initialisation permettant au terminal de reconstruire cette clé cryptographique ;
- un lien, typiquement une URL (Uniform Ressource Locator), permettant d'aller lire, typiquement uniquement en cas d'authentification réussie du terminal, cette clé cryptographique sur un serveur de clés cryptographiques; ou
- une valeur d'initialisation, permettant au terminal de reconstruire cette clé cryptographique, typiquement, en réalisant un calcul de la valeur de cette clé en utilisant, par exemple, un algorithme secret connu seulement du terminal et de la tête de réseau.

De façon alternative, le contenu est fourni protégé par un système de gestion de droits numériques sans toutefois être chiffré. La clé de contenu ne figure alors pas parmi les données d'accès insérées dans la licence.

Dans un autre mode de réalisation, le contenu multimédia est fourni protégé par un système d'accès conditionnel, ou CAS, pour Conditional Access System. La terminologie du domaine des systèmes d'accès conditionnel est alors utilisée. Le lecteur intéressé pourra par exemple en trouver une présentation plus complète dans le document : « Functional Model of a Conditional Access System », EBU Review, Technical European Broadcasting Union, Bruxels, BE, N° 266, le 21 décembre 1995. Un segment est alors une cryptopériode, une licence de terminal un EMM, et la licence intermédiaire un ECM. La date de transmission est alors typiquement insérée dans un ECM.

Dans un autre mode de réalisation, le contenu est fourni, par le système, protégé par tout autre type de système de protection de contenus, tel par exemple qu'un système de protection de données plus classique ne réalisant pas de gestion de droits d'accès. Le procédé revendiqué s'applique alors à la fourniture des messages nécessaires à l'acheminement des clés de déchiffrement, par exemple.

Dans un autre mode de réalisation, tous les segments d'un bloc de segments de contenu ne se suivent pas immédiatement dans le déroulement temporel du contenu. Certains de ces segments y sont alors séparés par des segments n'appartenant pas au bloc considéré.

En variante, un terminal partage avec au moins un autre terminal, sa clé de chiffrement et sa clé de déchiffrement, dites de terminal.

En variante le réseau 3 comporte un premier sous-réseau de transmission unidirectionnelle d'informations entre la tête 1 et le terminal 4 et un second sous-réseau de transmission bidirectionnelle d'informations entre le serveur 2 et le terminal 4. Par exemple, le premier sous-réseau est un réseau de transmission satellitaire et le second sous-réseau est le réseau Internet.

En variante, l'horloge 12 de la tête 1 est synchronisée avec une horloge de référence selon un protocole distinct de NTP. Dans une autre variante, l'horloge 12 est synchronisée avec le serveur 2 de dates. Dans une autre variante, l'horloge 12 est synchronisée avec une horloge de référence interne à la tête 1. Dans une dernière variante, l'horloge 12 est elle-même une horloge de référence interne à la tête 1. De même, le serveur 2 de dates peut être synchronisé avec une horloge de référence selon un protocole distinct de NTP. Dans une autre variante, le serveur 2 comporte lui-même une horloge de référence avec laquelle il est synchronisé. Il est aussi possible que l'horloge 12 et le serveur 2 de dates soient synchronisés avec des horloges de référence selon des protocoles différents.

En variante, le serveur 2 de dates est intégré à la tête 1 de réseau.

Le nombre de blocs et de segments par bloc peut varier. Par exemple, le flux 6 comporte un seul bloc de segments de contenu. Dans une autre variante, chaque bloc comporte un seul segment. Dans un autre mode de réalisation, le nombre de segments dans chaque bloc n'est pas nécessairement le même d'un bloc à l'autre.

La date TSᵢ de transmission du segment 622 peut être insérée dans un message ou une structure de données autre que la licence intermédiaire associée à ce segment. Toutefois, ce message ou cette structure de données autre est transmis conjointement au segment et à la licence intermédiaire. Par exemple, la date de transmission est adjacente à chaque segment transmis dans le flux mais ne fait pas partie de la structure de données formant la licence Lᵢ.

D'autre mode de réalisation de la licence Lₚ sont possibles. Par exemple, la tête 1 peut, à l'étape 1200, pour compléter le droit 52 d'accès de la licence Lₚ, combiner, des règles ou critères d'accès additionnels au cryptogramme (K_{Gp})*K_{T}. Lors de l'étape 1416, ces règles ou critères additionnels sont alors également extraits du droit 52 d'accès par le terminal 4, puis évalués. Le succès de cette évaluation conditionne alors la mise en oeuvre l'étape 1418 de déchiffrement du cryptogramme (K_{Gp})*K_{T}.

En variante, la tête 1 de réseau obtient la date de transmission d'un segment auprès du serveur 2 de dates, ou d'un serveur de dates tiers externe au système de la figure 1.

En variante, le service de fourniture de contenus considéré est un service de diffusion ou de téléchargement de contenus dont l'enregistrement n'est pas contrôlé par le système de protection de contenus, et la requête reçue à l'étape 1100 vise à obtenir le contenu pour l'enregistrer en vue de le jouer ultérieurement. Les étapes 1204 et 1206 ne répondent alors à aucune contrainte de synchronisation, de façon que, en fonction de la dynamique du service, elles peuvent être simultanées ou se succéder dans l'un ou l'autre ordre. Il en est alors de même des étapes 1300 et 1302.

Dans une autre variante, la durée prédéterminée TSW n'est pas utilisée. Cela revient à prendre cette durée TSW égale à zéro à l'étape 1404 du procédé de la figure 5. De même, il n'est pas nécessaire d'utiliser la durée prédéterminée ETTD. Cela revient donc à considérer que à l'étape 1404 de la figure 5, la durée ETTD est infinie. Dans ce cas, la mise à jour de la date TTₛ est déclenchée autrement. Par exemple, cette mise à jour est déclenchée périodiquement ou après avoir reçu un nombre prédéterminé de segments Si à déchiffrer.

En variante, lors de l'étape 1408, si la valeur du compteur d'échecs de connexion franchit le seuil Max_tts_bypass, le terminal 4 inhibe les étapes 1410 et suivantes du procédé, notamment l'extraction du droit d'accès de la licence Lₚ de terminal, et met par exemple fin à la phase de jeu du contenu multilmédia protégé.

En variante, le terminal 4 ne comporte pas de compteur d'échecs de connexion au serveur 2 de dates. Ainsi, lors de l'étape 1408, dès la première fois que la connexion à ce serveur ne peut-être établie, le terminal inhibe l'extraction du droit d'accès de la licence interdisant ainsi l'accès aux segments.

Lors de l'étape 1414, si la dernière date TE de service acquise ne satisfait pas le critère temporel 54 de la licence Lₚ trouvée à l'étape 1412, le terminal peut rechercher ou tenter d'exploiter une autre licence comportant l'identifiant Id(K_{Gp}) 50 de la clé K_{Gp} intermédiaire. Dans une autre variante, il inhibe les étapes 1416 et suivantes du procédé, notamment l'extraction du droit d'accès de la licence Lₚ de terminal, et met par exemple fin à la phase de jeu du contenu multilmédia protégé.

## Revendications

1. Procédé de fourniture, à un terminal, de contenus multimédias protégés par un système de protection de contenus multimédias, procédé dans lequel :
lors d'une phase d'émission, une tête de réseau :
a) associe (1200), à un bloc de segments de contenu multimédia, un droit d'accès nécessaire au terminal pour accéder à tout segment de ce bloc en vue de le jouer, et une licence comportant le droit d'accès et un critère temporel de validité, chacun de ces segments comportant au moins une suite de groupes d'images vidéo ou de trames audio, ce bloc comportant un ou plusieurs segments,
b) transmet (1204, 1206) au terminal la licence et un flux comportant chaque segment,
lors d'une phase de réception, le terminal :
c) reçoit (1302) le flux de segments de contenu multimédia,
d) reçoit (1300) la licence,
lors d'une phase de jeu des segments, le terminal :
e) authentifie (1408) un serveur de dates et, uniquement si le serveur de dates est authentifié avec succès, acquiert (1408) une date de service auprès de ce serveur de dates,
f) évalue (1414) le critère temporel de la licence en regard de la dernière date de service acquise, puis, si le résultat de l'évaluation est positif, extrait (1416, 1418) le droit d'accès de la licence permettant ainsi l'accès aux segments et, sinon, inhibe (1414) l'extraction du droit d'accès de la licence interdisant ainsi l'accès aux segments,
procédé **caractérisé en ce que** :
- lors de l'étape b), la tête de réseau associe (1202) à chacun des segments sa date de transmission, et la transmet (1206) dans le flux conjointement au segment, puis, lors de la phase de jeu,
- lors d'une étape g), le terminal :
• extrait (1400, 1402) du flux, conjointement à un segment, la date de transmission du segment, puis
• compare (1404) la date de transmission extraite à la dernière date de service acquise, et
• seulement si la date de transmission extraite est postérieure à la cette dernière date de service acquise, l'acquiert (1406) comme date de service, et l'utilise (1414) comme dernière date de service acquise lors d'une prochaine exécution de l'étape f) entre deux exécutions successives de l'étape e).

2. Procédé d'obtention, par un terminal, pour la mise en oeuvre du procédé de la revendication 1, de contenus multimédias protégés, dans lequel le terminal :
lors de la phase de réception :
- à l'étape c), reçoit (1302) un flux comportant chaque segment du bloc de segments de contenu multimédia,
- à l'étape d), reçoit (1300) une licence comportant un droit d'accès nécessaire au terminal pour accéder à tout segment du bloc en vue de le jouer, et un critère temporel de validité,
lors de la phase de jeu des segments :
- à l'étape e), authentifie (1408) un serveur de dates et, uniquement si le serveur de dates est authentifié avec succès, acquiert (1408) une date de service auprès de ce serveur de dates,
- à l'étape f), évalue (1414) le critère temporel de validité de la licence en regard de la dernière date de service acquise, puis, si le résultat de l'évaluation est positif, extrait (1416, 1418) le droit d'accès de la licence permettant ainsi l'accès aux segments et, sinon, inhibe (1414) l'extraction du droit d'accès de la licence interdisant ainsi l'accès aux segments,
procédé **caractérisé en ce que** :
lors de la phase de jeu, à l'étape g), le terminal :
• extrait (1400, 1402) du flux, conjointement à un segment, la date de transmission de ce segment, puis
• compare (1404) la date de transmission extraite à la dernière date de service acquise, et
• seulement si la date de transmission extraite est postérieure à la cette dernière date de service acquise, l'acquiert (1406) comme date de service, et l'utilise (1414) comme dernière date de service acquise lors d'une prochaine exécution de l'étape f) entre deux exécutions successives de l'étape e).

3. Procédé selon la revendication 2, dans lequel le droit d'accès de la licence comporte un clé intermédiaire ou un cryptogramme de cette clé intermédiaire obtenu en la chiffrant avec un clé cryptographique du terminal, la clé intermédiaire étant une clé utilisée pour chiffrer les clés Kₛᵢ de tous les segments du bloc de segments, chaque clé Kₛᵢ étant la clé utilisée pour chiffrer un segment respectif du contenu multimédia..

4. Procédé selon l'une quelconque des revendications 2 et 3, dans lequel le terminal, à l'étape g), compare la date de transmission extraite à la dernière date de service acquise, et, seulement si la date de transmission extraite est antérieure à cette dernière date de service d'au plus une première durée prédéterminée, alors la dernière date de service acquise est maintenue (1404) inchangée et l'étape f) est exécutée en utilisant cette dernière date de service acquise maintenue inchangée.

5. Procédé selon l'une quelconque des revendications 2 à 4, dans lequel le terminal, à l'étape g), compare (1406) la date de transmission extraite à la date de service acquise lors de la dernière exécution de l'étape e), et déclenche (1406) une nouvelle exécution de l'étape e) si l'écart entre la date de transmission extraite et cette date de service est supérieure à une deuxième durée prédéterminée et, dans le cas contraire, ne déclenche pas (1406) cette nouvelle exécution de l'étape e) en réponse à cette comparaison.

6. Procédé selon l'une quelconque des revendications 2 à 5, dans lequel, à l'étape e), si la connexion au serveur de dates ne peut pas être établie, en réponse, le terminal inhibe (1408) l'extraction du droit d'accès de la licence interdisant ainsi l'accès aux segments.

7. Procédé selon la revendication 6, dans lequel :
- le terminal compte (1408) le nombre de fois consécutives où la connexion au serveur de dates ne peut être établie, et
- en réponse au franchissement par ce nombre d'un seuil prédéterminé, inhibe (1408) l'extraction du droit d'accès de la licence interdisant ainsi l'accès aux segments et, dans le cas contraire, autorise (1408) l'extraction du droit d'accès de la licence autorisant ainsi l'accès aux segments.

8. Procédé selon l'une quelconque des revendications 2 à 7, dans lequel, entre deux exécutions consécutives de l'étape f), le terminal extrait (1402) une ou plusieurs dates de transmission de segments reçus et, à chaque extraction d'une date de transmission postérieure à la dernière date de service acquise, le terminal l'acquiert (1406) comme date de service, à utiliser comme dernière date de service acquise lors de la prochaine exécution de l'étape f).

9. Support d'enregistrement d'informations, **caractérisé en ce qu'**il comporte des instructions pour la mise en oeuvre d'un procédé conforme à l'une quelconque des revendications 2 à 8, lorsque ces instructions sont exécutées par un calculateur électronique.

10. Terminal (4) pour la mise en oeuvre d'un procédé d'obtention de contenus multimédias conforme à l'une quelconque des revendications 2 à 8, dans lequel le terminal est apte :
lors d'une phase de réception :
c) à recevoir un flux comportant chaque segment d'un bloc de segments de contenu multimédia, chacun de ces segments comportant au moins une suite de groupes d'images vidéo ou de trames audio,
d) à recevoir une licence comportant un droit d'accès nécessaire au terminal pour accéder à tout segment du bloc en vue de le jouer, et un critère temporel de validité, lors d'une phase de jeu des segments :
e) à authentifier un serveur de dates et, uniquement si le serveur de dates est authentifié avec succès, à acquérir une date de service auprès de ce serveur de dates,
f) à évaluer le critère temporel de validité de la licence en regard de la dernière date de service acquise, puis, si le résultat de l'évaluation est positif, à extraire le droit d'accès de la licence permettant ainsi l'accès aux segments et, sinon, à inhiber l'extraction du droit d'accès de la licence interdisant ainsi l'accès aux segments, terminal **caractérisé en ce qu'**il comporte un calculateur (44) électronique programmé pour, lors de la phase de jeu, mettre en oeuvre une étape g) lors de laquelle :
• il extrait du flux, conjointement à un segment, la date de transmission de ce segment, puis
• il compare la date de transmission extraite à la dernière date de service acquise, et
• seulement si la date de transmission extraite est postérieure à la cette dernière date de service acquise, il l'acquiert comme date de service, et l'utilise comme dernière date de service acquise lors d'une prochaine exécution de l'étape f) entre deux exécutions successives de l'étape e).

## Patentansprüche

1. Verfahren zur Bereitstellung von durch ein Schutzsystem von Multimediainhalten geschützten Multimediainhalten an ein Endgerät, wobei in dem Verfahren:
bei einer Sendephase ein Netzwerkkopf:
a) mit einem Block von Segmenten von Multimediainhalten ein notwendiges Recht auf Zugriff auf das Endgerät, um auf jedes Segment dieses Blocks zuzugreifen, um es abzuspielen, und eine Lizenz verbindet (1200), die das Recht auf Zugriff und ein Zeitkriterium der Gültigkeit aufweist, wobei jedes dieser Segmente mindestens eine Folge von Gruppen von Videobildern oder Audiorahmen aufweist, wobei dieser Block ein oder mehrere Segmente aufweist,
b) die Lizenz und einen Strom, der jedes Segment aufweist, an das Endgerät (1204, 1206) überträgt,
das Endgerät bei einer Empfangsphase:
c) den Strom von Segmenten von Multimediainhalten empfängt (1302),
d) die Lizenz empfängt (1300),
das Endgerät bei einer Phase des Abspielens der Segmente:
e) einen Datenserver authentifiziert (1408) und nur, wenn der Datenserver erfolgreich authentifiziert wird, ein Betriebsdatum bei diesem Datenserver erwirbt (1408),
f) das Zeitkriterium der Lizenz in Bezug auf das letzte erworbene Betriebsdatum beurteilt (1414) und dann, wenn das Ergebnis der Beurteilung positiv ist, das Recht auf Zugriff der Lizenz extrahiert (1416, 1418), wodurch auf diese Weise der Zugriff auf die Segmente genehmigt wird, und anderenfalls das Extrahieren des Rechts auf Zugriff der Lizenz blockiert (1414), wodurch auf diese Weise der Zugriff auf die Segmente untersagt wird,
wobei das Verfahren **dadurch gekennzeichnet ist, dass**:
- bei dem Schritt b) der Netzwerkkopf mit jedem der Segmente sein Übertragungsdatum verbindet (1202) und es in dem Strom zusammen mit dem Segment überträgt (1206) und dann bei der Phase des Abspielens
- das Endgerät bei einem Schritt g):
• aus dem Strom zusammen mit einem Segment das Übertragungsdatum des Segments extrahiert (1400, 1402) und dann
• das extrahierte Übertragungsdatum mit dem letzten erworbenen Betriebsdatum vergleicht (1402) und es dann,
• nur, wenn das extrahierte Übertragungsdatum nach diesem letzten erworbenen Betriebsdatum liegt, als Betriebsdatum erwirbt (1406) und es als letztes erworbenes Betriebsdatum bei einer nächsten Durchführung des Schrittes f) zwischen zwei aufeinanderfolgenden Durchführungen des Schrittes e) verwendet (1414).

2. Verfahren zum Erhalten von geschützten Multimediainhalten durch ein Endgerät zum Umsetzen des Verfahrens des Anspruchs 1, wobei das Endgerät:
bei der Empfangsphase:
- im Schritt c) einen Strom, der jedes Segment des Blocks von Segmenten von Multimediainhalten aufweist, empfängt (1302),
- im Schritt d) eine Lizenz empfängt (1300), die ein notwendiges Recht auf Zugriff auf das Endgerät, um auf jedes Segment dieses Blocks zuzugreifen, um es abzuspielen, und ein Zeitkriterium der Gültigkeit aufweist,
bei einer Phase des Abspielens der Segmente:
- im Schritt e) einen Datenserver authentifiziert (1408) und nur, wenn der Datenserver erfolgreich authentifiziert wird, ein Betriebsdatum bei diesem Datenserver erwirbt (1408),
- im Schritt f) das Zeitkriterium der Gültigkeit der Lizenz in Bezug auf das letzte erworbene Betriebsdatum beurteilt (1414) und dann, wenn das Ergebnis der Beurteilung positiv ist, das Recht auf Zugriff der Lizenz extrahiert (1416, 1418), wodurch auf diese Weise der Zugriff auf die Segmente genehmigt wird, und anderenfalls das Extrahieren des Rechts auf Zugriff der Lizenz blockiert (1414), wodurch auf diese Weise der Zugriff auf die Segmente untersagt wird,
wobei das Verfahren **dadurch gekennzeichnet ist, dass**:
das Endgerät bei der Phase des Abspielens im Schritt g):
• aus dem Strom zusammen mit einem Segment das Übertragungsdatum dieses Segments extrahiert (1400, 1402) und dann
• das extrahierte Übertragungsdatum mit dem letzten erworbenen Betriebsdatum vergleicht (1404) und es dann,
• nur, wenn das extrahierte Übertragungsdatum nach diesem letzten erworbenen Betriebsdatum liegt, als Betriebsdatum erwirbt (1406) und es als letztes erworbenes Betriebsdatum bei einer nächsten Durchführung des Schrittes f) zwischen zwei aufeinanderfolgenden Durchführungen des Schrittes e) verwendet (1414).

3. Verfahren nach Anspruch 2, wobei das Recht auf Zugriff der Lizenz einen Zwischenschlüssel oder ein Kryptogramm dieses Zwischenschlüssels, der erhalten wird, indem er mit einem kryptografischen Schlüssel des Endgeräts verschlüsselt wird, aufweist, wobei der Zwischenschlüssel ein Schlüssel ist, der verwendet wird, um die Schlüssel Kₛᵢ von allen Segmenten des Blocks von Segmenten zu verschlüsseln, wobei jeder Schlüssel Kₛᵢ der Schlüssel ist, der verwendet wird, um ein jeweiliges Segment des Multimediainhalts zu verschlüsseln.

4. Verfahren nach einem der Ansprüche 2 und 3, wobei das Endgerät im Schritt g) das extrahierte Übertragungsdatum mit dem letzten erworbenen Betriebsdatum vergleicht, und nur, wenn das extrahierte Übertragungsdatum um höchstens eine vorbestimmte erste Zeitdauer vor diesem letzten Betriebsdatum liegt, wird dann das letzte erworbene Betriebsdatum unverändert beibehalten (1404) und der Schritt f) wird ausgeführt, indem dieses unverändert beibehaltene, letzte erworbene Betriebsdatum verwendet wird.

5. Verfahren nach einem der Ansprüche 2 bis 4, wobei das Endgerät im Schritt g) das extrahierte Übertragungsdatum mit dem Betriebsdatum vergleicht (1406), das bei der letzten Ausführung des Schrittes e) erworben wird, und eine neue Ausführung des Schrittes e) auslöst (1406), wenn der Unterschied zwischen dem extrahierten Übertragungsdatum und diesem Betriebsdatum größer als eine vorbestimmte zweite Zeitdauer ist und im gegenteiligen Fall diese neue Ausführung des Schrittes e) als Antwort auf diesen Vergleich nicht auslöst (1406).

6. Verfahren nach einem der Ansprüche 2 bis 5, wobei das Endgerät im Schritt e), wenn die Verbindung zum Datenserver nicht hergestellt werden kann, als Antwort das Extrahieren des Rechts auf Zugriff der Lizenz blockiert (1408), wodurch auf diese Weise der Zugriff auf die Segmente untersagt wird.

7. Verfahren nach dem Anspruch 6, wobei:
- das Endgerät die Anzahl der aufeinanderfolgenden Male zählt (1408), bei denen die Verbindung zum Datenserver nicht hergestellt werden kann und
- als Antwort des Überschreitens einer vorgegebenen Schwelle durch diese Anzahl, das Extrahieren des Rechts auf Zugriff der Lizenz blockiert (1408) und auf diese Weise den Zugriff auf die Segmente untersagt und im gegenteiligen Fall das Extrahieren des Rechts auf Zugriff der Lizenz genehmigt (1408), wodurch auf diese Weise der Zugriff auf die Segmente genehmigt wird.

8. Verfahren nach einem der Ansprüche 2 bis 7, wobei zwischen zwei aufeinanderfolgenden Ausführungen des Schrittes f) das Endgerät eines oder mehrere Übertragungsdaten von empfangenen Segmenten extrahiert (1402) und das Endgerät bei jedem Extrahieren eines Übertragungsdatums, das nach dem letzten erworbenen Betriebsdatum liegt, dieses als Betriebsdatum erwirbt (1406), das als letztes erworbenes Betriebsdatum bei der nächsten Ausführung des Schrittes f) zu verwenden ist.

9. Informationsaufzeichnungsmedium, **dadurch gekennzeichnet, dass** es Anweisungen für das Umsetzen eines Verfahrens nach einem der Ansprüche 2 bis 8 aufweist, wenn diese Anweisungen von einem elektronischen Rechner ausgeführt werden.

10. Endgerät (4) zum Umsetzen eines Verfahrens zum Erhalten von Multimediainhalten nach einem der Ansprüche 2 bis 8, wobei das Endgerät geeignet ist, um:
bei einer Empfangsphase:
c) einen Strom zu empfangen, der jedes Segment eines Blocks von Segmenten von Multimediainhalten aufweist, wobei jedes dieser Segmente mindestens eine Folge von Gruppen von Videobildern oder Audiorahmen aufweist,
d) eine Lizenz zu empfangen, die ein notwendiges Recht auf Zugriff auf das Endgerät, um auf jedes Segment dieses Blocks zuzugreifen, um es abzuspielen, und ein Zeitkriterium der Gültigkeit aufweist,
bei einer Phase des Abspielens der Segmente:
e) einen Datenserver zu authentifizieren und nur, wenn der Datenserver erfolgreich authentifiziert wird, ein Betriebsdatum bei diesem Datenserver zu erwerben,
f) das Zeitkriterium der Gültigkeit der Lizenz in Bezug auf das letzte erworbene Betriebsdatum zu beurteilen und dann, wenn das Ergebnis der Beurteilung positiv ist, das Recht auf Zugriff auf die Lizenz zu extrahieren, wodurch auf diese Weise der Zugriff auf die Segmente genehmigt wird, und anderenfalls das Extrahieren des Rechts auf Zugriff der Lizenz zu blockieren, wodurch auf diese Weise der Zugriff auf die Segmente untersagt wird,
Endgerät, das **dadurch gekennzeichnet ist, dass** es einen elektronischen Rechner (44) aufweist, der programmiert ist, um bei der Phase des Abspielens einen Schritt g) umzusetzen, bei dem:
• es aus dem Strom zusammen mit einem Segment das Übertragungsdatum dieses Segments extrahiert und dann
• das extrahierte Übertragungsdatum mit dem letzten erworbenen Betriebsdatum vergleicht und es dann,
• nur, wenn das extrahierte Übertragungsdatum nach diesem letzten erworbenen Betriebsdatum liegt, als Betriebsdatum erwirbt und es als letztes erworbenes Betriebsdatum bei einer nächsten Durchführung des Schrittes f) zwischen zwei aufeinanderfolgenden Durchführungen des Schrittes e) verwendet.

## Claims

1. Method for supplying, to a terminal, multimedia content protected by a multimedia content protection system, a method in which:
during a transmission phase, a headend:
a) associates (1200), with a block of multimedia content segments, a necessary right of access for the terminal to access any segment of this block in order to play it, and a licence including the right of access and a temporal validity criterion, each of these segments including at least one series of groups of video images or of audio frames, this block comprising one or more segments,
b) transmits (1204, 1206) to the terminal the licence and a stream comprising each segment,
in a reception phase, the terminal:
c) receives (1302) the stream of multimedia content segments,
d) receives (1300) the licence,
in a phase of playing the segments, the terminal:
e) authenticates (1408) a date server and, only if the date server is successfully authenticated, acquires (1408) a service date from this date server,
f) evaluates (1414) the time criterion of the licence with respect to the last acquired service date, then, if the result of the evaluation is positive, extracts (1416, 1418) the right of access from the licence thus allowing access to the segments and, otherwise, disables (1414) the extraction of the right of access from the licence thus preventing the access to the segments,
the method being **characterized in that**:
- in the step b), the headend associates (1202) with each of the segments its date of transmission, and transmits it (1206) in the stream together with the segment, then, during the playing phase,
- in a step g), the terminal:
• extracts (1400, 1402) from the stream, together with a segment, the date of transmission of the segment, then
• compares (1404) the extracted transmission date to the last acquired service date, and
• only if the extracted transmission date is later than this last acquired service date, acquires it (1406) as service date, and uses it (1414) as last acquired service date in a next execution of the step f) between two successive executions of the step e).

2. Method for obtaining, by a terminal, for the implementation of the method of Claim 1, protected multimedia content, in which the terminal:
in the reception phase:
- in the step c), receives (1302) a stream comprising each segment of the block of multimedia content segments,
- in the step d), receives (1300) a licence including a right of access necessary to the terminal to access any segment of the block in order to play it, and a temporal validity criterion,
in the segment playing phase:
- in the step e), authenticates (1408) a date server and, only if the date server is successfully authenticated, acquires (1408) a service date from this date server,
- in the step f), evaluates (1414) the licence temporal validity criterion with respect to the last acquired service date, then, if the result of the evaluation is positive, extracts (1416, 1418) the right of access from the licence thus allowing access to the segments and, otherwise, disables (1414) the extraction of the right of access from the licence thus preventing the access to the segments,
the method being **characterized in that**:
in the playing phase, in the step g), the terminal:
• extracts (1400, 1402) from the stream, together with a segment, the date of transmission of this segment, then
• compares (1404) the extracted transmission date with the last acquired service date, and
• only if the extracted transmission date is later than this last acquired service date, acquires it (1406) as service date, and uses it (1414) as last acquired service date in a next execution of the step f) between two successive executions of the step e).

3. Method according to Claim 2, in which the right of access of the licence comprises an intermediate key or a cryptogram of this intermediate key obtained by encrypting it with a cryptographic key of the terminal, the intermediate key being a key used to encrypt the keys Kₛᵢ of all the segments of the block of segments, each key Kₛᵢ being the key used to encrypt a respective segment of the multimedia content.

4. Method according to either one of Claims 2 and 3, in which the terminal, in the step g), compares the extracted transmission date with the last acquired service date, and, only if the extracted transmission date is prior to this last service date by no more than a first predetermined duration, then the last acquired service date is kept (1404) unchanged and the step f) is executed by using this last acquired service date that has been kept unchanged.

5. Method according to any one of Claims 2 to 4, in which the terminal, in the step g), compares (1406) the extracted transmission date to the service date acquired on the last execution of the step e), and initiates (1406) a new execution of the step e) if the difference between the extracted transmission date and this service date is longer than a second predetermined duration and, otherwise, does not initiate (1406) this new execution of the step e) in response to this comparison.

6. Method according to any one of Claims 2 to 5, in which, in the step e), if the connection to the date server cannot be established, in response, the terminal disables (1408) the extraction of the right of access from the licence thus preventing the access to the segments.

7. Method according to Claim 6, in which:
- the terminal counts (1408) the number of consecutive times in which the connection to the date server cannot be established, and
- in response to this number crossing a predetermined threshold, disables (1408) the extraction of the right of access from the licence thus preventing the access to the segments and, otherwise, allows (1408) the extraction of the right of access from the licence thus allowing the access to the segments.

8. Method according to any one of Claims 2 to 7, in which, between two consecutive executions of the step f), the terminal extracts (1402) one or more received segment transmission dates and, each time a transmission date is extracted that is later than the last acquired service date, the terminal acquires it (1406) as service date, to be used as last acquired service date on the next execution of the step f).

9. Information storage medium, **characterized in that** it comprises instructions for the implementation of a method according to any one of Claims 2 to 8, when these instructions are executed by an electronic computer.

10. Terminal (4) for implementing a method for obtaining multimedia content according to any one of Claims 2 to 8, in which the terminal is suitable:
in a reception phase:
c) for receiving a stream comprising each segment of a block of multimedia content segments, each of these segments including at least one series of groups of video images or of audio frames,
d) for receiving a licence including a right of access necessary for the terminal to access any segment of the block in order to play it, and a temporal validity criterion,
in a segment playing phase:
e) for authenticating a date server and, only if the date server is successfully authenticated, for acquiring a service date from this date server,
f) for evaluating the temporal validity criterion of the licence with respect to the last acquired service date, then, if the result of the evaluation is positive, for extracting the right of access from the licence thus allowing the access to the segments and, otherwise, for disabling the extraction of the right of access from the licence thus preventing the access to the segments,
the terminal being **characterized in that** it comprises an electronic computer (44) programmed to, in the playing phase, implement a step g) in which:
• it extracts from the stream, together with a segment, the date of transmission of this segment, then
• it compares the extracted transmission date to the last acquired service date, and
• only if the extracted transmission date is later than this last acquired service date, it acquires it as service date, and uses it as last acquired service date on a next execution of the step f) between two successive executions of the step e).
